## Europäisches Patentamt

## European Patent Office

## Office européen des brevets

(11) Veröffentlichungsnummer: **0 286 787 B1**

(12) **EUROPÄISCHE PATENTSCHRIFT**

(45) Veröffentlichungstag der Patentschrift:
29.08.90

(51) Int. Cl.⁵: **F16H 55/14, F16H 57/00**

(21) Anmeldenummer: 88101366.8

(22) Anmeldetag: 30.01.88

(54) Dämpfungsmittel zum Dämpfen der Schallabstrahlung für Räder.

(30) Priorität: 08.04.87 DE 3711359

(43) Veröffentlichungstag der Anmeldung:
19.10.88 Patentblatt 88/42

(45) Bekanntmachung des Hinweises auf die Patenterteilung:
29.08.90 Patentblatt 90/35

(84) Benannte Vertragsstaaten:
ES FR GB IT SE

(56) Entgegenhaltungen:
EP-A- 170 989
EP-A- 251 243
EP-A- 261 525
DE-A- 3 023 977
DE-A- 3 141 101
DE-C- 172 536

(73) Patentinhaber: Pelzer, Helmut, Neue Strasse 5,
D-5804 Herdecke-Ende(DE)

(72) Erfinder: Pelzer, Helmut, Neue Strasse 5,
D-5804 Herdecke-Ende(DE)

(74) Vertreter: Schneider, Wilhelm, Dipl.-Phys., Danziger
Weg 9, D-3052 Bad Nenndorf(DE)

## Beschreibung

Gegenstand der Erfindung ist ein Dämpfungsmittel zum Dämpfen der Schallabstrahlung als Luftschall oder Körperschall für Räder, insbesondere für Zahnräder, mit am Radrand eingeformter Nut, in die ein Ring eingesetzt ist, wobei die Radscheibe zum Zahnkranz hin kreiszylindrische Flächen aufweist.

Bei Zahnrädern werden im Betrieb durch den normalen Zahneingriff, den sogenannten Eingriffstoß, Eigenschwingungen angeregt, die in verschiedenen Moden auftreten. Diese Moden sind abhängig von der Form und der Steifigkeit des Zahnrades. Der Eingriff und die die Schwingung anregende Größe ist dagegen von der Ausbildung der Zahnung abhängig.

So tritt zum Beispiel bei einem Zahnrad, das aus Zahnkranz, Scheibe und Nabe besteht, bei einer ersten Resonanzfrequenz eine Mode auf, die eine Kippbewegung der Nabe gegenüber der Scheibe bewirkt. Die Drehachse des Zahnrades steht nicht mehr senkrecht auf der Ebene des Zahnkranzes. Diese Schwingung führt im wesentlichen zur Anregung von Körperschall, die Erzeugung von Luftschall tritt dagegen zurück.

Bei einer weiteren Mode führt der Zahnkranz eine periodische Pumpbewegung in Richtung der Welle aus, gegensinnig in zwei um 90 Grad gegeneinander versetzten Richtungen. Dies führt zu einer periodischen Biegung der Scheibe zwischen zwei gegeneinander um 90 Grad versetzten Ovalen. Gleichzeitig wird dabei die Nabe verformt, ebenfalls zwischen zwei um 90 Grad versetzten Ovalen, dies aber um 90 Grad versetzt, so daß bei einer maximalen Verformung der Scheibe in einer Richtung eine maximale Verformung der Nabe in einer dazu um 90 Grad versetzten Richtung auftritt. Die energiereichere und damit die für die Schallbelastung wichtigere Schwingbewegung ist dabei die des Zahnkranzes. Daraus folgt, daß eine Versteifung der Scheibe keine Minderung der Schwingungen, sondern lediglich eine Verschiebung zu höheren Frequenzen hin bewirkt. Hier kann nur eine Dämpfung der Amplitude der Schwingung vermindern. Diese Mode ist ebenfalls für die Erregung von Körperschall aber in noch höherem Maße für Luftschall wichtig.

Bei einer dritten Mode tritt noch eine Pumpbewegung der Nabe in Richtung der Welle auf, so daß sich hier eine starke Verbiegung der Scheibe, ein Hub und eine Kippbewegung der Nabe und die Pumpbewegung des Zahnkranzes überlagern, wodurch hier mehr als vier Schwingungsknoten vorhanden sind. Diese Mode ist sowohl für die Erzeugung von Körperschall als auch von Luftschall wichtig.

Aus den vorstehenden Ausführungen geht hervor, daß bei Anregung der erwähnten Moden sowohl Axialschwingungen als auch Radialschwingungen auftreten.

Nach einer Veröffentlichung von Drago und Brown in PTD/7/79, insbesondere Seite 80, letzter Absatz und Figur 6 auf der gleichen Seite wird vorgeschlagen, Dämpfungsringe, zum Beispiel Sprengringe mit quadratischem Querschnitt in Nuten einzulegen, die am Radrand eingeformt sind. Dabei beruht die Dämpfung auf der Zentrifugalbewegung der Ringe und damit auf deren Masse. Dies hat den Nachteil, daß zur Erhöhung der Dämpfung die Masse der Ringe erhöht werden muß, was einen erhöhten Aufwand an Gewicht und Material bedeutet.

Der Erfindung liegt die Aufgabe zugrunde, bei Rädern der eingangs beschriebenen Art die Schwingung ohne einen erheblichen Mehraufwand an Gewicht und Material zu dämpfen.

Die erfindungsgemäße Aufgabe wird dadurch gelöst, daß an der kreiszylindrischen Fläche eine umlaufende Nut mit länglichem radialem Querschnitt eingeformt ist, in die ein Gegenring mit länglichem radialem Querschnitt eingesetzt ist.

Der besondere Vorteil der erfindungsgemäßen Lösung ist darin zu sehen, daß durch die längliche Ausbildung des Querschnittes der Nut und des Gegenringes eine größere Anlagefläche dieser Teile gegeneinander gegeben ist, wobei die Dämpfung der Schwingungen durch Reibung bewirkt wird.

In Weiterbildung der Erfindung ist die Nut am Boden und der Gegenring am Außenrand kreisförmig gerundet, so daß sich die beiden Teile gut aneinander anlegen können.

Die Reibungswirkung wird noch erhöht, wenn nach einer weiteren Ausführungsform die Nut am Boden kreisförmig ausgebildet ist und zwischen dem Boden der Nut und dem Gegenring ein Ring mit Rundprofil aus Gummi oder gummielastischem Kunststoff eingelegt ist.

Die Figuren zeigen in zum Teil schematischer Darstellung Ausführungsbeispiele von Dämpfungsmitteln nach der Lehre der Erfindung.

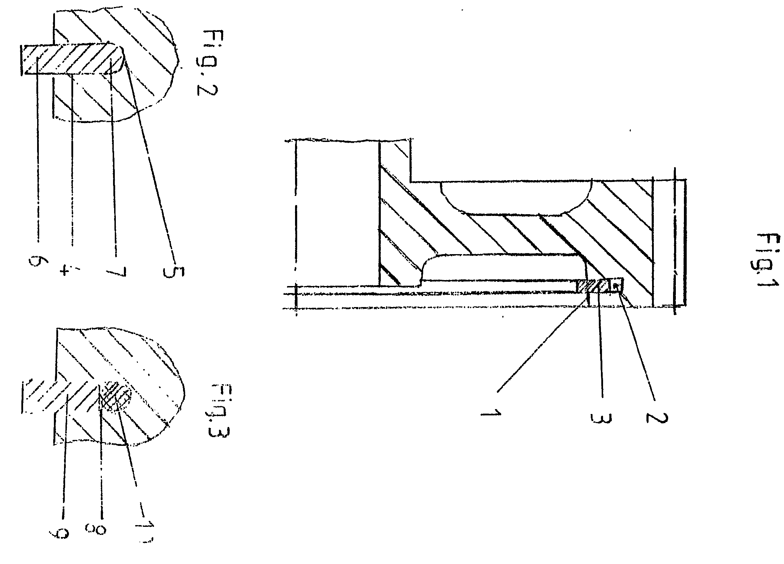

Nach Figur 1 ist in die zum Zahnkranz hin kreiszylindrische Fläche 1 des Zahnrades eine umlaufende Nut 2 mit länglichem radialem Querschnitt eingeformt, in die der Gegenring 3 eingesetzt ist.

Nach Figur 2 ist die Nut 4 am Boden 5 und der Gegenring 6 an seinem Außenrand 7 kreisförmig gerundet. Dadurch wird die gegenseitige Anlage der beiden und ihre Reibung gegeneinander begünstigt.

Endlich zeigt Figur 3 eine am Boden kreisförmig ausgebildete Nut 8. Der Gegenring 9 liegt über einen Ring 10 mit Rundprofil, der aus Gummi oder gummielastischem Kunststoff besteht an dem Boden der Nut an.

## Patentansprüche

1. Dämpfungsmittel zum Dämpfen der Schallabstrahlung als Luftschall oder Körperschall für Räder, insbesondere für Zahnräder, mit am Radrand eingeformter Nut (2) in die ein Ring (3) eingesetzt ist, wobei die Radscheibe zum Zahnkranz hin kreiszylindrische Flächen (1) aufweist, dadurch gekennzeichnet, daß an der kreiszylindrischen Fläche (1) eine umlaufende Nut (2) mit länglichem radialem Querschnitt eingeformt ist, in die ein Gegenring (3) mit länglichem radialem Querschnitt eingesetzt ist.

2. Dämpfungsmittel nach Anspruch 1, dadurch gekennzeichnet, daß die Nut (4) am Boden (5) und der Gegenring (6) am Außenrand (7) kreisförmig gerundet sind.

3. Dämpfungsmittel nach Anspruch 1, dadurch gekennzeichnet, daß die Nut (8) am Boden kreisförmig ausgebildet ist und zwischen dem Boden der Nut (8) und dem Gegenring (9) ein Ring (10) mit Rundprofil aus Gummi oder gummielastischem Kunststoff eingelegt ist.

## Claims

1. Damping means for damping the noise radiation in the form of airborne noise or structure-borne noise for wheels, in particular for gears having a groove (2) formed at the edge of the wheel, in which groove a ring (3) is inserted, the wheel disc having circular cylindrical faces (4) towards the gear rim, characterized in that a circumferential groove (2) having an elongate radial cross-section is formed in the circular cylindrical face (1), in which groove a counterring (3) having an elongate radical cross-section is inserted.

2. Damping means according to claim 1, characterized in that the groove (4) is circularly rounded at the base (5) and the counterring (6) is circularly rounded at the outer edge.

3. Damping means according to claim 1, characterized in that the groove (8) is of circular design at the base and a ring (10) of rubber or rubber-elastic plastic having a round profile is inserted between the base of the groove and the counterring (9).

## Revendications

1. Moyens d'amortissement pour amortir le rayonnement phonique en tant que son aérien ou son dans la masse pour des roues, en particulier pour des roues d'engrenage, avec une gorge (2) formée dans le bord de roue, dans laquelle est introduit un anneau (3), le disque de roue présentant des surfaces (4) cylindriques circulaires allant en direction de la couronne dentée, caractérisés en ce qu'une gorge circulaire (2) de section radiale allongée, dans laquelle est introduit un contre-anneau (3) de section radiale allongée, est formée sur la surface (1) cylindrique circulaire.

2. Moyens d'amortissement selon la revendication 1, caractérisés en ce que la gorge (4) est arrondie en forme de cercle sur le fond (5) et que le contre-anneau (6) est arrondi en forme de cercle sur le bord extérieur (7).

3. Moyens d'amortissement selon la revendication 1, caractérisés en ce que la gorge (8) est réalisée en forme de cercle sur le fond et qu'un anneau (10) de profil rond, en caoutchouc ou en matière plastique ayant l'élasticité du caoutchouc, est inséré entre le fond de la gorge (8) et le contre-anneau (9).

# Fig.1

# Fig. 2

# Fig.3